# EUROPÄISCHE PATENTANMELDUNG

(11) **EP 3 485 956 A1**
(43) Veröffentlichungstag der Anmeldung: **22.05.2019**
(21) Anmeldenummer: 18198377.6
(22) Anmeldetag: 02.10.2018
(51) Int. Cl.: B01D 46/00, C10K 1/02, C10B 47/44, C10B 53/02, B01D 46/24, C10B 47/30, C10B 47/32

(54) **PYROLYTISCHER GASERZEUGER**

(30) Priorität: 03.10.2017 DE 102017122915
(71) Anmelder: Graf von Schlitz, gen. von Görtz, Rüdiger Maria, 36110 Schlitz (DE)
(72) Erfinder: Graf von Schlitz, gen. von Görtz, Rüdiger Maria, 36110 Schlitz (DE)
(74) Vertreter: Patentanwaltzkanzlei Hutzelmann

(57) **Zusammenfassung**

Pyrolytischer Gaserzeuger (1) zur Erzeugung von Nutzgas aus Biomasse, insbesondere Holz, Ölsaaten, kohlenstoffhaltigen Abfällen od. dgl., wobei ein Vergasungskanal (3) vorgesehen ist, der Vergasungskanal (3) mit einer Wärmequelle, insbesondere einem Brenner (9) versehen ist, der dem Vergasungskanal (3) während der Vergasung der Biomasse von außen Wärme zuführen kann, ein Vorpyrolyserohr (2) dem Vergasungskanal (3) vorgeschaltet sein kann und ein Ascheaustrag (14) dem Vergasungskanal (3) nachgeschaltet ist, wobei die Biomasse im Vergasungskanal (3) vergast wird, während das zu vergasende Material von einem Materialbehälter (5) bis zum Ascheaustrag (14) mechanisch transportiert wird.

## Beschreibung

Die Erfindung bezieht sich auf einen pyrolytischen Gaserzeuger zur Erzeugung von Nutzgas aus Biomasse, insbesondere Holz, Ölsaaten, kohlenstoffhaltigen Abfällen od. dgl.

Es sind verschiedene derartige Gaserzeuger bekannt, die jedoch alle den Nachteil aufweisen, nur schwer handhabbar zu sein, keinen befriedigenden Wirkungsgrad haben und keine, den Anforderungen an eine weitere Verwertung des erzeugten Gases in beispielsweise Blockheizkraftwerken genügende, Sauberkeit des Gases aufweisen.

Zudem haben sich immer wieder Probleme bei der Vergasung von ölhaltigen Saaten, Presskuchen dieser Saaten oder dergleichen, aber auch von anderen kohlenstoffhaltigen Materialien, wie beispielsweise kohlenstoffhaltigen Abfällen ergeben. Gerade bei derartigem Vergasungsgut bilden sich Teere, die für einen Gasmotor nicht zuträglich sind.

Desweiteren sind diese Gaserzeuger nur sehr schwer skalierbar und müssen für jede Leistungsstufe quasi neu entwickelt werden.

Daher liegt der vorliegenden Erfindung die Aufgabe zugrunde, einen Gaserzeuger vorzuschlagen, der nicht nur mit Holz, sondern auch mit ölhaltigen Saaten wie zum Beispiel Raps, Presskuchen oder anderer Biomasse, aber auch mit kohlenstoffhaltigen Abfällen betrieben werden kann und dabei qualitativ hochwertiges Pyrolyse Nutzgas liefert. Zudem ist eine sehr gute Skalierbarkeit gefordert.

Diese Aufgabe wird erfindungsgemäß dadurch gelöst, daß ein Vergasungskanal vorgesehen ist, der Vergasungskanal mit einer Wärmequelle, insbesondere einem Brenner versehen ist, der dem Vergasungskanal während der Vergasung der Biomasse von außen Wärme zuführen kann, ein Vorpyrolyserohr dem Vergasungskanal vorgeschaltet sein kann und ein Ascheaustrag dem Vergasungskanal nachgeschaltet ist, wobei die die Biomasse im Vergasungskanal vergast wird, während das zu vergasende Material von einem Materialbehälter bis zum Ascheaustrag mechanisch transportiert wird.

Durch diesen Aufbau wird dafür Sorge getragen, daß der Pyrolysevorgang immer unter optimalen Bedingungen verläuft. Durch Anpassung der Länge und des Durchmessers des Vergasungskanales ist der Gaserzeuger nahezu beliebig skalierbar.

Dabei hat es sich als sehr vorteilhaft erwiesen, wenn der Vergasungskanal als Rohr ausgebildet ist, das drehbar um seine Längsachse gelagert ist.

Durch die Drehung des Rohres wird das Vergasungsmaterial im Vergasungskanal umgelagert.

Äußerst vorteilhaft ist es erfindungsgemäß auch, wenn der Vergasungskanal auf seiner Innenseite mit Fördermitteln zum mechanischen Transport des Vergasungsmaterials ausgerüstet ist.

Diese Fördermittel sorgen einerseits dafür, daß das Vergasungsgut durchmischt wird und andererseits dafür, daß das Vergasungsgut über die Länge des Vergasungskanals fort transportiert wird.

Dabei hat es sich als sehr vorteilhaft erwiesen, wenn als Fördermittel Schaufeln, Schnecken und/oder Leitbleche vorgesehen sind.

Hiermit wird ein sicherer Transport und eine gute Durchmischung des Vergasungsgutes sichergestellt. Zudem wird bei vorgegebener Drehzahl des Vergasungskanales eine vorgegebene Verweilzeit des Vergasungsgutes im Vergasungsrohr eingehalten. Ein Verklumpen des Vergasungsgutes wird durch das fortwährende Durchmischen wirksam verhindert. Durch unterschiedliche Drehzahlen des Vergasungsrohres kann ebenfalls eine Skalierung der Leistung erfolgen.

Weiterhin ist es erfindungsgemäß sehr vorteilhaft, wenn die Fördermittel derart ausgestaltet sind, daß diese das Vergasungsgut anzuheben, zu durchmischen und zu transportieren vermögen.

Hiermit wird das Vergasungsgut angehoben und rieselt wieder auf den jeweiligen Boden im Vergasungskanal. Die Oberfläche des Vergasungsgutes steht somit für den Vergasungsprozess zur Verfügung. Der Durchsatz wird damit erhöht und auch bei Dauerbetrieb eingehalten. Zudem wird das Vergasungsgut durch den Vergasungskanal transportiert.

Eine weitere sehr vorteilhafte Fortbildung der Erfindung liegt vor, wenn ein Wärmezuführungskanal vorgesehen ist, welcher das Vorpyrolyserohr und/oder den Vergasungskanal wenigstens teilweise umgibt, wobei keine gasseitige Verbindung zwischen dem Wärmezuführungskanal und dem Vorpyrolyserohr und/oder dem Vergasungskanal besteht und daß Leitbleche am Vergasungskanal und/oder am Vorpyrolyserohr vorgesehen sein können, die in den Wärmezuführungskanal hineinragen.

Durch die Zuführung von externer Wärme wird die Pyrolyse gestartet und aufrecht erhalten. Durch Leitbleche wird der Wärmeübergang zwischen Wärmezuführungskanal und den Prozesskanälen nochmals verbessert.

Sehr vorteilhaft ist es erfindungsgemäß, wenn der Brenner im Wärmezuführungskanal vorgesehen ist.

Eine Vermischung der Abgase eines Brenners mit dem Nutzgas wird durch die Entkopplung vermieden. Die Qualität des erzeugten Pyrolysegases ist damit besonders hoch. Anstatt eines Brenners kann auch jede andere geeignete Wärmequelle eingesetzt werden. Denkbar ist hier beispielsweise eine elektrische Beheizung oder eine Beheizung über einen Wärmetauscher.

Äußerst vorteilhaft ist es erfindungsgemäß, wenn der Wärmezuführungskanal im wesentlichen unterhalb des jeweiligen Prozesskanals, also unterhalb des Vorpyrolyserohrs und/oder des Vergasungskanals, jedoch diesen trotzdem wenigstens teilweise umgebend angeordnet ist.

Hierdurch wird eine sehr gleichmässige Wärmezufuhr sichergestellt.

Sehr vorteilhaft ist es erfindungsgemäß auch, wenn ein Filtermaterialbehälter mit vorzugsweise Filterkohle vorgesehen ist, durch den das erzeugte Nutzgas zum Filtern und Abkühlen geleitet wird.

Damit wird eine sehr weitreichende Reinigung und Abkühlung des Nutzgases erzielt.

Dabei hat es sich als sehr vorteilhaft herausgestellt, wenn eine Gaseinleitung im Deckbereich des Behälters oberhalb des Füllgutes vorgesehen ist.

Ebenfalls sehr vorteilhaft ist es, wenn eine Gasausleitung bestehend aus einer Mehrzahl von Rohren im unteren Bereich des Behälters vorgesehen ist.

Durch beide Maßnahmen wird einerseits eine sehr gute Durchströmung des Filtermateriales durch das Nutzgas und andererseits ein nur geringfügiges Mitreißen von Filtermaterialteilchen durch das gereinigte Gas sichergestellt.

Äußerst vorteilhaft ist es auch, wenn eine Einrichtung zum Zuführen von mit Gasrückständen belastetem Filtermaterial zum Vergasungskanal vorgesehen ist.

Das belastete Filtermaterial wird dann, sofern Kohlenstoffe bzw. Kohlenstoffverbindungen enthalten sind, zusammen mit dem Pyrolysematerial entgast und damit genutzt.

Gemäß einer weiteren Ausgestaltung der Erfindung ist es auch sehr vorteilhaft, wenn am Ende des Vergasungskanales ein Austrag für nicht vollständig vergastes Vergasungsgut vorgesehen ist.

So wird ein Anhäufen von nicht vollständig vergastem Vergasungsgut im Vergasungskanal vermieden.

Dabei ist es äußerst vorteilhaft, wenn eine Zuführeinrichtung vorgesehen ist, die das ausgetragene Vergasungsgut am Anfang des Vergasungsrohres zuzuführen vermag.

Das nicht vollständig vergaste und ausgetragene Vergasungsgut wird so nochmals dem Pyrolyseprozess zugeführt und vollständig vergast.

Ebenfalls sehr vorteilhaft ist es erfindungsgemäß, wenn eine Zuführeinrichtung vorgesehen ist, die das ausgetragene Vergasungsgut dem Filtermaterialbehälter zuführt.

Gerade beim Vergasen von Holz entsteht Holzkohle, die dann gleich zum Filtern des Nutzgases eingesetzt werden kann.

Dabei hat es sich als sehr vorteilhaft erwiesen, wenn eine Siebeinrichtung vorgesehen ist, die kleine Partikel des nicht vollständig vergasten Vergasungsgutes vor Zuführung zum Filtermaterialbehälter auszusieben vermag.

Zu kleine Partikel des Filtermateriales würden eine Durchströmung des Filtermaterialbehälters mit Nutzgas erschweren oder sogar verhindern.

Es hat sich dabei allerdings auch als sehr vorteilhaft erwiesen, wenn eine Zuführung des ausgesiebten Vergasungsgutes zum Austrag des Filtermaterialbehälters vorgesehen ist.

Das ausgesiebte Vergasungsgut wird so trotzdem vollständig verwertet.

Eine weitere sehr vorteilhafte Ausgestaltung der Erfindung liegt auch darin, daß ein Filter für das heiße Nutzgas vorgesehen ist, der dem Vergasungskanal nachgeschaltet ist und der feste Rückstände im Nutzgas, mitgerissene Asche und Staub auszufiltern vermag.

Hierdurch wird die Asche aus dem System entnomen.

Dabei hat es sich als sehr vorteilhaft erwiesen, wenn der Filter als Keramikfilter mit einer Vielzahl von Filterkanälen ausgebildet ist.

Die Asche und der Staub lagern sich im Keramikfilter ab.

Eine weitere sehr vorteilhafte Ausgestaltung der Erfindung ist auch darin zu sehen, daß ein Kühler zum Abkühlen des Nutzgases vorzugsweise nach dem Filter vorgesehen ist. Durch einen Kühler wird das Nutzgas von der hohen Prozesstemperatur herabgekühlt. Ein Kühler kann zusätzlich oder anstatt des Filtermaterialbehälters vorgesehen sein.

Dabei ist es sehr vorteilhaft, wenn der Kühler als Röhrenkühler ausgebildet ist, in dessen Röhren rotierende Bürsten vorgesehen sind, die an den Röhreninnenwänden kondensierendes Öl, Teere, Wasser und anderweitige Ablagerungen zu einer Auffangeinheit abzutransportieren vermögen.

Äußerst vorteilhaft ist es dabei, wenn die Bürsten spiralförmig ausgebildet sind und/oder daß die Röhren stehend angeordnet sind.

Durch diese Ausgestaltungen wird einerseits eine gute Kühlwirkung und andererseits auch ein sehr guter Austrag von Öl, Teer, Wasser und anderen Stoffen gewährleistet.

Eine weitere äußerst vorteilhafte Ausgestaltung der Erfindung liegt auch dann vor, wenn ein Gaswäscher vorgesehen ist, bei dem das Gas mit Hilfe eines Ölnebels gewaschen wird.

Durch den Gaswäscher werden weitere, noch im Nutzgas vorhandene Partikel, aber auch Teerbestandteile entfernt.

Dabei hat es sich als äußerst vorteilhaft erwiesen, wenn mehrere rotierende Öldüsen vorgesehen sind, die von einem ebenfalls rotierenden Schleuderrad umgeben sind und das Gas in den Raum zwischen Düsen und Schleuderrad eingeleitet wird.

Hierdurch wird das gesamte Nutzgas mit einem sehr fein verteilten und homogenen Ölnebel versetzt.

Es hat sich erfindungsgemäß auch als sehr vorteilhaft erwiesen, wenn ein Tropfenabscheider vorgesehen ist, der das Nutzgas vom Ölnebel zu trennen vermag. Dabei ist es sehr vorteilhaft, wenn eine Vielzahl von Prallblechen vorgesehen ist, die zueinander versetzt und/oder verwinkelt angeordnet sind, wobei an diesen Prallblechen der mit Verunreinigungen versetzte Ölnebel abgeschieden und zu einem Ölvorrat abgeleitet wird.

Durch einen derartigen Tropfenabscheider wird der Ölnebel wirkungsvoll wieder vom Nutzgas getrennt.

Sehr vorteilhaft ist es in diesem Zusammenhang auch, wenn als Öl insbesondere ein Pflanzenöl vorgesehen sein kann.

Es hat sich gezeigt, daß sich die bei der Pyrolyse anfallenden Teere und Teerbestandteile besonders gut in Pflanzenölen lösen und dann gelöst mit dem belasteten Pflanzenöl verbrannt werden können.

Eine weitere sehr vorteilhafte Fortbildung der Erfindung liegt auch darin, daß eine Sicherheitseinrichtung zur Verhinderung von Flammrückschlägen oder dergleichen dem Gaserzeuger nachgeschaltet ist.

Dabei hat es sich als sehr vorteilhaft erwiesen, wenn ein Wasserbad vorgesehen ist, durch welches das Nutzgas hindurchgeleitet wird.

Damit wird auf einfache Art und Weise ein Rückschlagschutz erreicht, der zudem äußerst unempfindlich gegenüber etwaige aggressive Bestandteile des Nutzgases ist.

Im folgenden wird die Erfindung anhand mehrerer Ausführungsbeispiele veranschaulicht.

Dabei zeigen:
- Fig. 1: eine schematische Darstellung eines pyrolytischen Gaserzeugers,

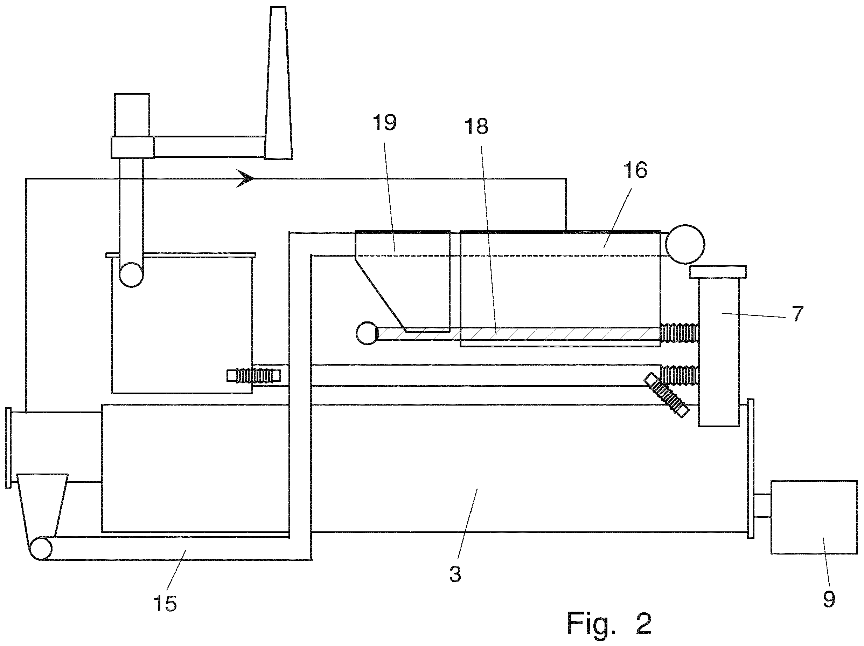

- Fig. 2: eine schematische Darstellung eines weiteren Gaserzeugers mit einem Filtermaterialbehälter,

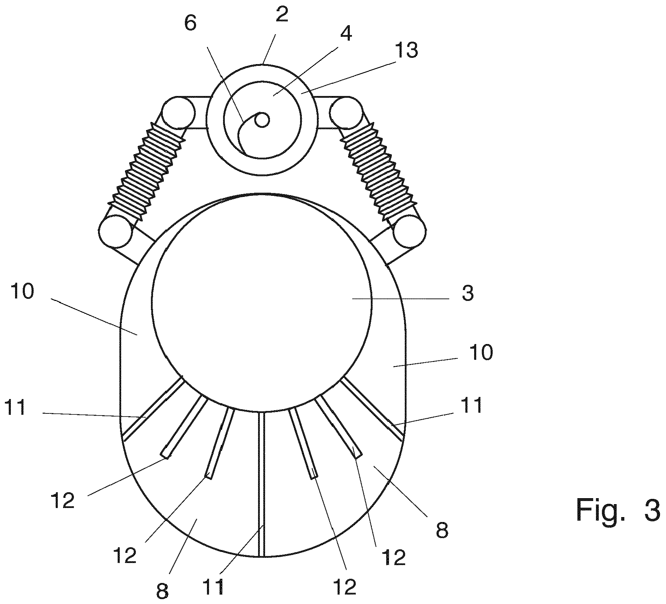

- Fig. 3: einen Schnitt durch einen Vergasungskanal und ein Vorpyrolyserohr, bei dem eine Transportschnecke im Vorpyrolyserohr vorgesehen ist,

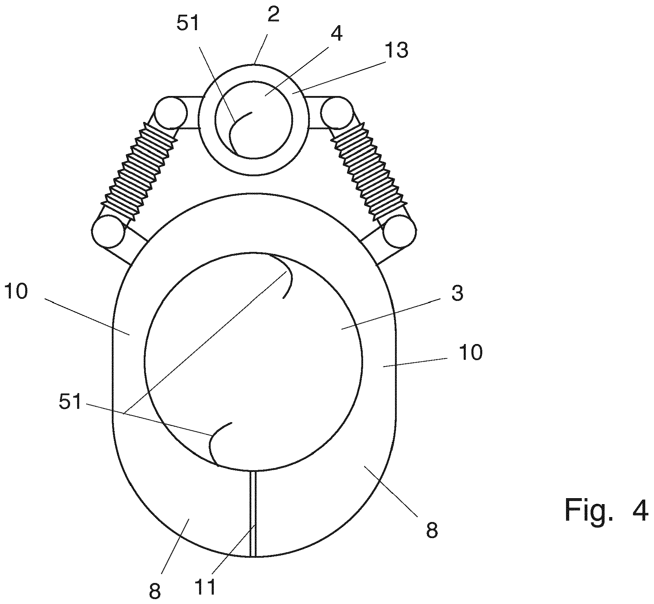

- Fig. 4: einen Schnitt durch einen Vergasungskanal und ein Vorpyrolyserohr, wobei beide drehend ausgebildet sind,

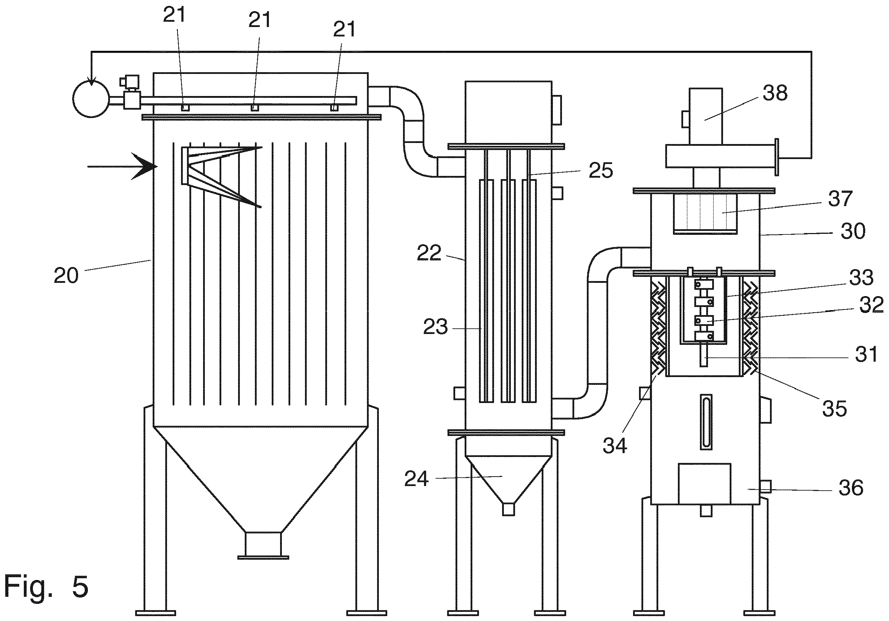

- Fig. 5: eine schematische Darstellung eines Heißgasfilters, Nutzgaskühlers und eines Gaswäschers,

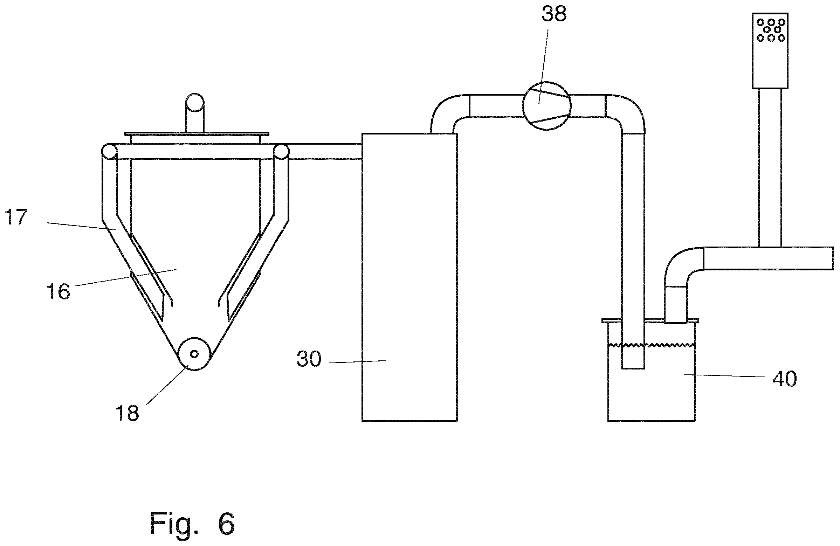

- Fig. 6: eine schematische Darstellung eines Flammenrückschlagschutzes, und

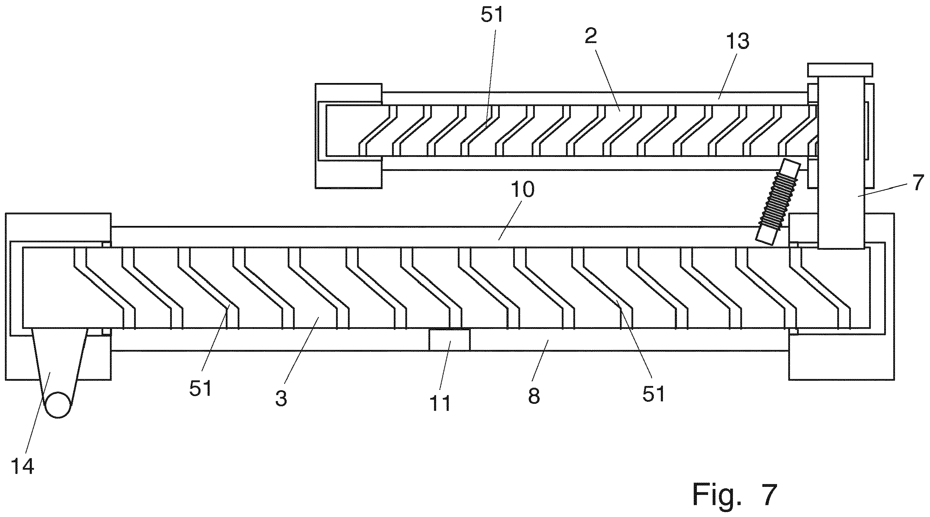

- Fig. 7: eine schematische Darstellung des erfindungsgemäßen Vergasungsrohres und eines Vorpyrolyserohres.

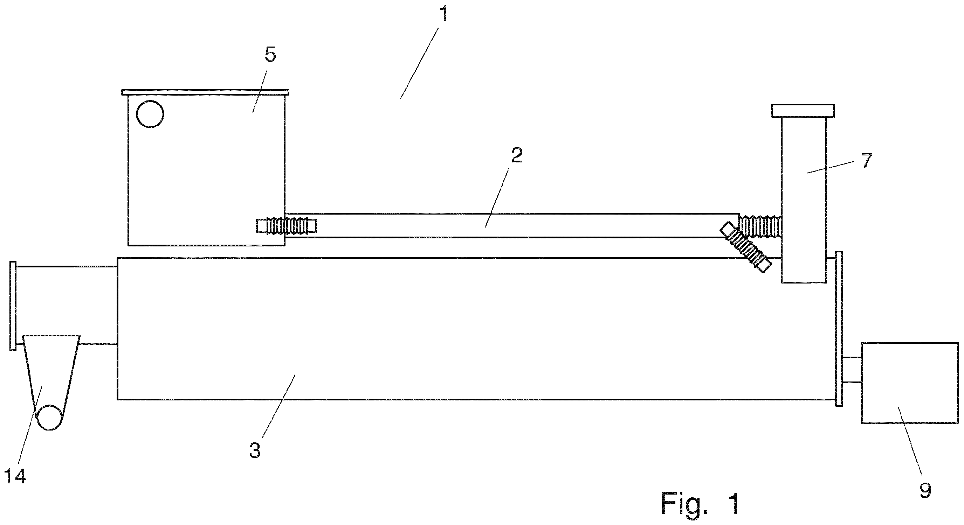

Mit 1 ist in Fig. 1 ein pyrolytischer Gaserzeuger bezeichnet, der im wesentlichen aus einem Vorpyrolyserohr 2 und einem Vergasungskanal 3 aufgebaut ist und zur Herstellung von Nutzgas, oftmals bekannt als Holzgas, aus Vergasungsmaterial dient. Das Vorpyrolyserohr 2 ist coaxial doppelwandig ausgebildet. Das Vergasungsmaterial wird im inneren Bereich 4 von einem Vorratsbehälter 5 durch das Vorpyrolyserohr 2 transportiert. Der äußere Bereich 13 des Vorpyrolyserohres 2 ist als Wärmezuführungskanal ausgebildet. Im Vorpyrolyserohr 2 wird das Vergasungsmaterial getrocknet, d.h. vorpyrolysiert, das dann anschließend durch einen Füllschacht 7 hindurch zusammen mit dem beim Trocknen entstehenden Wasserdampf in den Vergasungskanal 3 gelangt. Unterhalb des Vergasungskanals 3 ist eine Unterkammer 8 angeordnet, in die ein Brenner 9 Wärme abgibt. Die Unterkammer ist dabei ein vom Vergasungskanal 3 getrennter Wärmezuführungskanal. Der Brenner 9 ist in diesem Ausführungsbeispiel am selben Ende des Vergasungskanales 3 angeordnet, an dem auch der Füllschacht 7 angeordnet ist. Am vom Brenner 9 abgewandten Ende der Unterkammer 8 ist ein Übergang zu einer Oberkammer 10 angeordnet, die im oberen Bereich den Vergasungskanal 3 umgibt. Durch die Oberkammer 10 und die Unterkammer 8 ist der Vergasungskanal 3 vollständig umgeben. Diese bilden gemeinsam den Wärmezuführungskanal. Dabei ist es auch denkbar, daß keine Aufteilung in Unterkammer 8 und Oberkammer 9 erfolgt, sondern der Vergasungskanal 3, der einen Prozesskanal darstellt, teilweise oder vollständig vom Wärmezuführungskanal umgeben ist. Unter dem Vergasungskanal 3 kann eine wenigstens abschnittsweise ausgeführte Stütze 11 vorgesehen sein, die ein Verwinden und Durchbiegen des Vergasungskanales 3 verhindert.

Der Vergasungskanal 3 ist drehbar um seine Längsachse gelagert. Auf seiner Innenseite sind als Schaufeln 51 ausgebildete Fördermittel vorgesehen, welche beim Drehen des Vergasungskanals 3 das Vergasungsmaterial anheben und wieder nach unten rieseln lassen, wodurch ein Verklumpen des Vergasungsmaterials verhindert wird. Zudem wird sichergestellt, daß die Partikel des Vergasungsmaterials gleichmäßig vergast werden. Asche wird mechanisch beim Herunterrieseln entfernt, wodurch eine vollständige Vergasung erzielt wird. Durch eine entsprechende geometrische Ausgestaltung der Schaufeln 51 wird zugleich das Vergasungsmaterial durch die Längserstreckung des Vergasungskanals 3 transportiert. Zudem werden Ablagerungen am Boden des Vergasungskanals 3 durch das ständige Auflockern vermieden.

Durch eine entsprechende Ausgestaltung der Schaufeln 51, dem Durchmesser und der Länge des Vergasungsrohres 3 und dessen Drehgeschwindigkeit wird der Durchsatz an Vergasungsmaterial und damit die vorgesehene Leistung bestimmt. Durch Erhöhung oder Erniedrigung der Drehgeschwindigkeit kann die Leistung skaliert werden. Ebenso durch den Durchmesser und die Länge des Vergasungsrohres 3. Nahezu beliebige Leistungsstufen sind realisierbar. So können nicht nur Kleinstanlagen für beispielsweise Einfamilienhäuser realisiert werden. Es sind auch Großanlagen für den Durchsatz mehrerer Tonnen Vergasungsmaterial am Tag denkbar. Als Vergasungsmaterial kann neben den bereits genannten nahezu jegliche Biomasse eingesetzt werden. Auch kohlenstoffhaltige Abfälle können vergast werden.

Es ist in diesem Zusammenhang auch denkbar, daß der Vergasungskanal 3 über seine Längserstreckung und in Transportrichtung des Vergasungsmaterials ansteigend angeordnet ist. Damit kann eine stärkere Auflockerung des Vergasungsmaterials bei verminderter Transportgeschwindigkeit erzielt werden.

Eine mögliche Ausgestaltung des Vergasungskanales 3 ist, daß der Vergasungskanal 3 jeweils an seinen Enden mit einem feststehenden Lager ausgestattet ist, in welchem sich der eigentliche Vergasungskanal 3 zu drehen vermag. Der Übergang zwischen Vergasungskanal 3 und Lager ist dabei zumindest hinreichend gasdicht ausgeführt. In den Lagern sind die Schleusen zum Einschleusen von Vergasungsmaterial und zum Ausschleusen von Asche und nicht vollständig vergastem Vergasungsgut vorgesehen.

Zusätzlich können wenigstens abschnittsweise vom Vergasungskanal 3 ausgehende Leitbleche 12 vorgesehen sein, die für einen besseren Wärmeübergang zwischen dem Wärmezuführungskanal und Vergasungskanal 3 sorgen und so eine ausreichende Temperatur für die pyrolytische Vergasung des Vergasungsmaterials sicherstellen. Übliche Temperaturen zur Vergasung von Biomasse liegen zwischen 800 und 1000°C. Vor allem sind auch höhere Temperaturen denkbar.

Wesentlich ist jedoch, daß keine Vermischung der Abgase des Brenners 9 und des durch die Pyrolyse im Vergasungskanal 3 und im Vorpyrolyserohr 2 erzeugten Nutzgase stattfindet.

Die Abwärme des Wärmezuführungskanals wird dann der Außenkammer 13 des Vorpyrolyserohres 2 zugeführt. Danach können die immer noch warmen Rauchgase des Brenners 9 durch den Vorratsbehälter 5 geleitet werden, wodurch dort das Vergasungsmaterial bereits vorgewärmt wird.

Das Vergasungsmaterial wird im Vergasungskanal 3 ebenfalls wie im Vorpyrolyserohr 2 mechanisch transportiert. Dies kann im Vorpyrolyserohr ebenfalls auf die gleiche Art und Weise geschehen, wie dies im Vergasungskanal 3 vorgesehen wird, nämlich durch innen angebrachte Fördermittel, welche durch Drehen des Vorpyrolyserohres 2 das Vergasungsmaterial auflockern, rieseln lassen und transportieren. Ebenfalls ist der Einsatz einer innen liegenden Förderschnecke 6 denkbar, welche das Vergasungsmaterial durch das Vorpyrolyserohr 2 transportiert. Im Vorpyrolyserohr wird das Vergasungsmaterial vorgetrocknet, d.h. vorpyrolysiert. Es entsteht dabei vor allem Wasserdampf, der dann im Vergasungskanal 3 aufgespalten wird..

Asche wird teilweise mit dem im Vergasungskanal 3 erzeugten Nutzgas mitgerissen. Nicht vollständig vergastes Vergasungsmaterial wird am Ende des Vergasungskanales 3 durch eine Schleuse 14 in einem Lager des Vergasungskanales 3 ausgeschleust. Wichtig ist dabei, daß die mit ausgeschleuste Asche beispielsweise durch Sieben vom nicht vollständig vergasten Vergasungsmaterial getrennt wird. Über eine Förderschnecke 15 wird das nicht vollständig vergaste Vergasungsmaterial entweder direkt wieder dem Vergasungskanal 3 zusammen mit neuem Vergasungsmaterial zugeführt oder aber einem Filtermaterialbehälter 16 zugeschlagen, durch den auch das erzeugte Nutzgas zur Filterung und Abkühlung geleitet werden kann. Hierzu wird beispielsweise das Nutzgas im oberen Bereich des Filtermaterialbehälters 16 eingeleitet und im unteren Bereich durch mehrere Rohre 17 wieder ausgeleitet. Durch die Verwendung mehrerer Ausleitrohre 17 wird die Strömungsgeschwindigkeit reduziert und so das Mitreissen von Filtermaterialpartikeln minimiert. Das belastete Filtermaterial, oftmals Holzkohle, wird dann über eine Förderschnecke 18 dem Füllschacht 7 zugeleitet und ebenfalls vollständig vergast.

Es ist auch denkbar, daß anstatt oder zusätzlich zu den Rohren 17 andere, großflächige Ausleitungen vorgesehen sind. Denkbar ist zum Beispiel, nach unten gerichtete Hutzen im Filtermaterialbehälter 16 anzuordnen, durch die hindurch das Nutzgas ausgeleitet wird.

Aus dem Vergasungsrohr 3 ausgeleitetes nicht vollständig ausgegastes Vergasungsmaterial weist eine recht unterschiedliche Körnigkeit auf. Zu feinkörniges Material im Filtermaterialbehälter 16 sorgt jedoch für einen erhöhten Widerstand beim Durchtritt des Nutzgases. Zudem steigt die Gefahr, daß Filtermaterialpartikel mit dem Nutzgas mitgerissen werden.

Daher kann dem Filtermaterialbehälter 16 noch eine Siebeinheit 19 vorgeschaltet sein, die kleine Filtermaterial-/Kohlepartikel auszusondern vermag und diese direkt der Förderschnecke 18 zuleitet zur vollständigen Vergasung.

Direkt nach dem Vergasungskanal 3 kann ein Heißgasfilter 20 vorgesehen sein, der als Keramikfilter ausgebildet sein kann. Ein derartiger Keramikfilter mit beispielsweise mehreren Filterkerzen sorgt für eine Anlagerung von Staub und Asche. Diese Anlagerungen können dann beispielsweise intervallmäßig durch unter Druck stehendes Gas abgeblasen werden, welches durch Druckdüsen 21 in den Filter 20 einzuströmen vermag. Als Abblasegas wird vollständig gereinigtes Nutzgas eingesetzt um eine Vermischung des Nutzgases mit anderen Komponenten zu vermeiden.

Andere Reinigungsmethoden, beispielsweise durch parallele Heißgasfilter, die dann jeweils wechselweise gereinigt werden, sind denkbar.

Es kann auch nach dem Heißgasfilter 20 und/oder nach dem Filtermaterialbehälter 16 noch ein Kühler 22 vorgesehen sein, der zum Beispiel mehrere Kühlröhren 23 aufweist. Das Nutzgas durchströmt diese Röhren 23 auf der Innenseite. Beim Abkühlen des Nutzgases an den Röhreninnenwänden lagert sich Wasser, Öl und eventuell auch Teerrückstände ab. Diese werden einerseits durch eine stehende Anordnung der Röhren 23 zu einem darunter angebrachten Auffangbehälter 24 abgeleitet und andererseits durch rotierende, vorzugsweise spiralförmig ausgebildete Bürsten 25 abgestreift.

Aber auch danach kann eine ausreichend gute Reinigung des Nutzgases noch nicht sichergestellt werden.

Deswegen kann ein zusätzlicher Gaswäscher 30 vorgesehen sein. Der Gaswäscher 30 weist auf einer rotierenden Achse 31 angeordnete Düsenringe 32 auf, durch die Öl, insbesondere Pflanzenöl, vorzugsweise Rapsöl gepresst und dabei zerstäubt wird. Die Düsenringe 32 sind innerhalb eines Rotationsrades 33 angeordnet. Zwischen den Düsenringen 32 und dem Rotationsrad 33 wird das Nutzgas eingeleitet. Durch das Zusammenspiel der rotierenden Düsenringe 32 und dem ebenfalls rotierenden Rotationsrad 33 wird ein sehr feiner Ölnebel erzeugt, der das Nutzgas vollständig und homogen durchsetzt und so für eine Abscheidung von noch im Nutzgas befindlicher Partikel in die Öltröpfchen hinein sorgt.

Der Ölnebel wird durch einen Tropfenabscheider 34 zurückgehalten, der aus einer Vielzahl von gewinkelten und versetzt zueinander angeordneten Prallblechen 35 besteht. Durch diese Prallbleche 35 muss das Nutzgas hindurchströmen. Das Öl wird zurückgehalten und tropft in einen Auffangbehälter 36 ab, der auch gleichzeitig als Vorratsbehälter dient. Der Tropfenabscheider ist koaxial außerhalb der Zerstäubungseinrichtung angeordnet. Durch den Einsatz von Pflanzenöl lösen sich die enthaltenen Teere und Teerbestandteile in diesem Öl.

Das Filteröl kann beispielsweise dem Brenner 9 als Brennstoff zugeleitet werden, so daß gleich auch die ausgefilterten Partikel und auch die gelösten Teere und Teerbestandteile verbrannt werden. Ein großer Vorteil dieser Zweitnutzung des Filteröles ist, daß das Öl für den Einsatz im Brenner bereits vorgewärmt ist und so besser verbrannt werden kann. Dem Auffangbehälter 36 wird dann laufend nach Bedarf Frischöl zugeleitet um einen vorgegebenen Füllstand zu erhalten.

Das so gewaschene Nutzgas wird noch durch einen oberhalb des Tropfenabscheiders 34 angeordneten Ringfilter 37 geleitet, der etwaige noch mitgerissene Öltröpfchen aufnimmt. Der Ringfilter 37 ist dabei jedoch sehr gering belastet, so daß dieser hohe Standzeiten aufweist.

Danach ist ein Saugzug 38 vorgesehen, der das Nutzgas durch die gesamte Anlage saugt und so für Unterdruck in der Anlage sorgt. Ein Entweichen von giftigem CO aus der Anlage ist damit ausgeschlossen.

Nach dem Saugzug 38 kann noch ein Flammenrückschlagschutz 40 vorgesehen sein, der als Wasserbad ausgebildet ist, durch das das Gas hindurchströmen muss. Die Feuchtigkeitsaufnahme des Nutzgases ist hier vernachlässigbar gering. Andererseits wird aber ein wirksamer Flammenrückschlagschutz 40 gebildet, der eine Verpuffung oder dergleichen auf den Bereich nach dem Gaserzeuger 1 beschränkt.

Das pyrolytisch erzeugte Nutzgas kann dann beispielsweise in einem BHKW als Antriebsgas genutzt werden.

## Patentansprüche

1. Pyrolytischer Gaserzeuger (1) zur Erzeugung von Nutzgas aus Biomasse, insbesondere Holz, Ölsaaten, kohlenstoffhaltigen Abfällen od. dgl., **dadurch gekennzeichnet, daß** ein Vergasungskanal (3) vorgesehen ist, der Vergasungskanal (3) mit einer Wärmequelle, insbesondere einem Brenner (9) versehen ist, der dem Vergasungskanal (3) während der Vergasung der Biomasse von außen Wärme zuführen kann, ein Vorpyrolyserohr (2) dem Vergasungskanal (3) vorgeschaltet sein kann und ein Ascheaustrag (14) dem Vergasungskanal (3) nachgeschaltet ist, wobei die Biomasse im Vergasungskanal (3) vergast wird, während das zu vergasende Material von einem Materialbehälter (5) bis zum Ascheaustrag (14) mechanisch transportiert wird.

2. Gaserzeuger nach Anspruch 1, **dadurch gekennzeichnet, daß** der Vergasungskanal (3) als Rohr ausgebildet ist, das drehbar um seine Längsachse gelagert ist.

3. Gaserzeuger nach Anspruch 1 oder 2, **dadurch gekennzeichnet, daß** der Vergasungskanal (3) auf seiner Innenseite mit Fördermitteln (51) zum mechanischen Transport des Vergasungsmaterials ausgerüstet ist.

4. Gaserzeuger nach Anspruch 3, **dadurch gekennzeichnet, daß** als Fördermittel Schaufeln (51), Schnecken und/oder Leitbleche vorgesehen sind.

5. Gaserzeuger nach Anspruch 3 oder 4, **dadurch gekennzeichnet, daß** die Fördermittel (51) derart ausgestaltet sind, daß diese das Vergasungsgut anzuheben, zu durchmischen und zu transportieren vermögen.

6. Gaserzeuger nach einem der vorangehenden Ansprüche, **dadurch gekennzeichnet, daß** ein Wärmezuführungskanal (8, 10, 13) vorgesehen ist, welcher das Vorpyrolyserohr (2) und/oder den Vergasungskanal (3) wenigstens teilweise umgibt, wobei keine gasseitige Verbindung zwischen dem Wärmezuführungskanal (8, 10, 13) und dem Vorpyrolyserohr (2) und/oder dem Vergasungskanal (3) besteht und daß Leitbleche (12) am Vergasungskanal (3) und/oder am Vorpyrolyserohr (2) vorgesehen sein können, die in den Wärmezuführungskanal hineinragen.

7. Gaserzeuger nach einem der vorangehenden Ansprüche, **dadurch gekennzeichnet, daß** der Brenner (9) im Wärmezuführungskanal (8) vorgesehen ist.

8. Gaserzeuger nach einem der vorangehenden Ansprüche, **dadurch gekennzeichnet, daß** der Wärmezuführungskanal (8, 10, 13) im wesentlichen unterhalb des jeweiligen Prozesskanals (2, 3), also unterhalb des Vorpyrolyserohrs (2) und/oder des Vergasungskanals (3), jedoch diesen trotzdem wenigstens teilweise umgebend angeordnet ist.

9. Gaserzeuger nach einem der vorangehenden Ansprüche, **dadurch gekennzeichnet, daß** ein Filtermaterialbehälter (16) mit vorzugsweise Filterkohle vorgesehen ist, durch den das erzeugte Nutzgas zum Filtern und Abkühlen geleitet wird, wobei eine Gaseinleitung im Deckbereich des Behälters (16) oberhalb des Füllgutes vorgesehen sein kann und/oder wobei eine Gasausleitung (17) bestehend aus einer Mehrzahl von Rohren im unteren Bereich des Behälters (16) vorgesehen sein kann und/oder wobei eine Einrichtung zum Zuführen von mit Gasrückständen belastetem Filtermaterial zum Vergasungskanal (3) vorgesehen sein kann.

10. Gaserzeuger nach einem der vorangehenden Ansprüche, **dadurch gekennzeichnet, daß** am Ende des Vergasungskanales (3) ein Austrag (14) für nicht vollständig vergastes Vergasungsgut vorgesehen ist und daß eine Zuführeinrichtung vorgesehen sein kann, die das ausgetragene Vergasungsgut am Anfang des Vergasungsrohres (3) zuzuführen vermag und/oder daß eine Zuführeinrichtung (18) vorgesehen ist, die das ausgetragene Vergasungsgut dem Filtermaterialbehälter (16) zuführt, wobei eine Siebeinrichtung (19) vorgesehen sein kann, die kleine Partikel des nicht vollständig vergasten Vergasungsgutes vor Zuführung zum Filtermaterialbehälter (16) auszusieben vermag, wobei wiederum eine Zuführung des ausgesiebten Vergasungsgutes zum Austrag des Filtermaterialbehälters (16) vorgesehen sein kann.

11. Gaserzeuger nach einem der vorangehenden Ansprüche, **dadurch gekennzeichnet, daß** ein Filter (20) für das heiße Nutzgas vorgesehen ist, der dem Vergasungskanal (3) nachgeschaltet ist und der feste Rückstände im Nutzgas, mitgerissene Asche und Staub auszufiltern vermag, wobei der Filter (20) als Keramikfilter mit einer Vielzahl von Filterkanälen ausgebildet sein kann.

12. Gaserzeuger nach einem der vorangehenden Ansprüche, **dadurch gekennzeichnet, daß** ein Kühler (22) zum Abkühlen des Nutzgases vorzugsweise nach dem Filter (20) vorgesehen ist, wobei der Kühler (22) als Röhrenkühler ausgebildet sein kann, in dessen Röhren (23) rotierende Bürsten (25) vorgesehen sind, die an den Röhreninnenwänden kondensierendes Öl, Teere, Wasser und anderweitige Ablagerungen zu einer Auffangeinheit (24) abzutransportieren vermögen, wobei die Bürsten (25) spiralförmig ausgebildet sind und/oder daß die Röhren (23) stehend angeordnet sein können.

13. Gaserzeuger nach einem der vorangehenden Ansprüchen, **dadurch gekennzeichnet, daß** ein Gaswäscher (30) vorgesehen ist, bei dem das Gas mit Hilfe eines Ölnebels gewaschen wird, wobei mehrere rotierende Öldüsen (32) vorgesehen sein können, die von einem ebenfalls rotierenden Schleuderrad (33) umgeben sind und daß das Gas in den Raum zwischen Düsen (32) und Schleuderrad (33) eingeleitet werden kann, wobei ein Tropfenabscheider (34) vorgesehen sein kann, der das Nutzgas vom Ölnebel zu trennen vermag, wobei eine Vielzahl von Prallblechen (35) vorgesehen sein kann, die zueinander versetzt und/oder verwinkelt angeordnet sind und daß an diesen Prallblechen (35) der mit Verunreinigungen versetzte Ölnebel abgeschieden und zu einem Ölvorrat abgeleitet werden kann und wobei als Öl insbesondere ein Pflanzenöl vorgesehen sein kann.

14. Gaserzeuger nach einem der vorangehenden Ansprüche, **dadurch gekennzeichnet, daß** eine Sicherheitseinrichtung (40) zur Verhinderung von Flammrückschlägen oder dergleichen dem Gaserzeuger nachgeschaltet ist, wobei die Sicherheitseinrichtung als Wasserbad ausgebildet sein kann, durch welches das Nutzgas hindurchgeleitet wird.
